# DEMANDE DE BREVET EUROPEEN

(11) **EP 3 835 509 A1**
(43) Date de publication de la demande: **16.06.2021**
(21) Numéro de dépôt: 20211951.7
(22) Date de dépôt: 04.12.2020
(51) Int. Cl.: E04D 13/16, E04B 9/00, E04B 9/18, E04B 1/76, E04F 13/08, F16B 5/06, F16B 21/04

(54) **DISPOSITIF DE FIXATION POUR UNE ISOLATION SOUS TOITURE**

(30) Priorité: 09.12.2019 FR 1913950
(71) Demandeur: Knauf Insulation, 92300 Levallois-Perret (FR)
(72) Inventeur: CAMILLATO, Giuliano, 91250 Saint Germain lès Corbeil (FR); EMON, Thierry, 25130 Villers le Lac (FR)
(74) Mandataire: Mazabraud, Xavier

(57) **Abrégé**

L'invention porte sur une suspente pour maintenir une isolation formée d'un isolant 4 et d'une membrane pare-vapeur 6, cette suspente comprenant une tige 10 traversant l'isolant et la membrane, une rondelle 17 pour soutenir l'isolant 3 et un embout 18 formant avec la rondelle une chicane pour tendre la membrane, et assurer son étanchéité autour de la tige 10.

## Description

La présente invention se rapporte au domaine de l'isolation thermique ou phonique et, plus particulièrement, de la rénovation thermique de l'habitat.

Afin d'isoler thermiquement un bâtiment, il est nécessaire de réaliser une isolation de la toiture, ce qui se fait généralement par l'intérieur et permet de ne pas dénaturer l'aspect extérieur du bâtiment. L'isolation inclut une membrane pare-vapeur et/ou d'étanchéité à l'air, généralement disposée sous une couche de matériau isolant, entre cette couche et le parement. La toiture peut être horizontale ou en pente ; le plafond est généralement horizontal. Une telle isolation peut aussi être utilisée sur une paroi verticale.

Il existe des suspentes qui permettent de suspendre un système d'isolation à une charpente existante du bâtiment. Ces suspentes comprennent généralement des moyens de fixation à la charpente, des moyens de support pour un isolant et des moyens de fixation pour un habillage intérieur qui permet de masquer l'isolant et la fixation. De telles suspentes sont notamment connues du document EP 3 156 556.

Cependant, lorsqu'elle est mise en œuvre, une telle suspente vient percer la membrane pare-vapeur, ce qui nécessite des moyens pour en rétablir l'étanchéité, autour de la suspente. La mise en œuvre de tels moyens, nécessite de l'opérateur qui en est chargé de grandes précautions et du temps ; dans les conditions d'un chantier, cette opération n'est pas toujours bien réalisée. La membrane peut notamment être fragilisée ou blessée et l'étanchéité peut se détériorer au cours du temps.

Selon la norme Européenne EN 1931 et le Document Technique Unifié DTU 31.2, une membrane par vapeur doit avoir une résistance au passage de la vapeur (Sd) supérieure à 18m ou à 90m, selon le cas. Typiquement, une membrane pare-vapeur a une épaisseur d'un à deux millimètres.

Dans les bâtiments comprenant une isolation avec pare-vapeur, il y a toujours des fuites. L'un des buts de la présente invention est de s'assurer que le système de suspension n'est pas un maillon faible dans l'étanchéité.

Un but de l'invention, est de proposer une pièce permettant de fixer facilement une isolation et un parement à une structure d'un bâtiment et assurer un niveau d'étanchéité satisfaisant de la membrane pare-vapeur.

Un autre but de l'invention est de proposer une telle pièce qui évite un pincement radial et/ou axial de la membrane dans une position d'usage, un tel pincement risquant de fragiliser ou blesser la membrane.

Pour résoudre ce problème l'invention propose une pièce qui permet de fixer une isolation et un parement à une structure d'un bâtiment, notamment à une toiture, notamment à une charpente de cette toiture, cette isolation pouvant comprendre une garniture de matériau isolant et une feuille, cette feuille pouvant être une membrane, notamment une membrane pare-vapeur, la pièce comprenant :
- une tige qui comprend des moyens pour fixer la pièce, au moins indirectement, à la structure ;
- des moyens pour porter la garniture ;
- des moyens pour y fixer, au moins indirectement, le parement ; et,
- des moyens pour former une chicane autour de la tige afin d'y insérer, le cas échéant, la feuille.

La pièce peut comprendre une rondelle et un embout, la tige comprenant successivement, selon un axe longitudinal :
- des moyens pour accrocher la rondelle sur la tige dans une position d'usage ; et,
- des moyens, pour solidariser l'embout avec la tige, dans la position d'usage, de sorte que, dans la position d'usage, la rondelle et l'embout forment ensemble la chicane.

La rondelle et/ou l'embout forment avantageusement le support pour la garniture.

La rondelle et l'embout peuvent comprendre, l'un une collerette et l'autre une coupelle, la collerette et la coupelle étant disposées de sorte que, dans la position d'usage, elles forment ensemble la chicane. De préférence, la collerette s'étend radialement. De façon encore plus préférée, dans la position d'usage, la collerette est, au moins partiellement, longitudinalement logée dans la coupelle.

Avantageusement, la pièce comprend une pointe disposée à une extrémité de la tige opposée aux moyens de fixation de la tige à la structure. La tige peut aussi comprendre, entre les moyens de fixation de la tige et les moyens d'accrochage, une allonge, de préférence sensiblement lisse et/ou cylindrique.

De préférence, la chicane forme un jeu longitudinal et/ou radial supérieur à l'épaisseur de la feuille, le cas échéant. Ainsi, on évite de pincer la feuille, ce qui risquerait de la détériorer.

La rondelle et l'embout sont conçus de sorte que, dans la position d'usage, il existe un jeu longitudinal entre un fond de la cuvette et la collerette et un jeu radial entre une paroi périphérique de la cuvette et la collerette, ces jeux mesurant de préférence au moins 1 millimètre, et de façon encore plus préférée, un jeu supérieur à 2 millimètres.

Avantageusement, la chicane est au moins partiellement démontable. Ainsi, l'embout peut être monté de façon amovible sur la tige. La rondelle peut aussi être montée de façon amovible sur la tige. De préférence, la rondelle est fixée à la tige par des moyens à baïonnette.

Les moyens pour solidariser l'embout peuvent comprendre une portion filetée prévue pour venir en prise avec un taraudage de cet embout et il existe avantageusement, entre les moyens d'accrochage et cette portion filetée, une butée pour limiter le vissage de l'embout sur la tige.

L'invention porte aussi sur un système d'isolation, notamment d'isolation thermique, comprenant une ou plusieurs pièces selon l'invention, une garniture de matériau isolant et une feuille, de préférence être une membrane, notamment une membrane pare-vapeur.

L'invention porte aussi sur un procédé d'isolation mettant en œuvre un tel système selon l'invention et comprenant les étapes suivantes, notamment dans cet ordre :
- fixation de la tige de chaque pièce à la structure ;
- embrochage de l'isolant sur les tiges ;
- fixation d'une rondelle sur au moins une des tiges ;
- embrochage de la feuille sur au moins une des tiges, sous la rondelle ; et,
- fixation d'un embout sur au moins une des tiges,
de préférence, de sorte que la membrane, le cas échéant, est maintenue de façon mobile entre la rondelle et l'embout.

Une pièce, un système ou un procédé selon l'invention peut être utilisé pour une isolation thermique et/ou pour une isolation phonique, notamment.

Plusieurs modes d'exécution de l'invention seront décrits ci-après, à titre d'exemples non limitatifs, en référence aux dessins annexés dans lesquels :
[Fig. 1] est une vue illustrant un système selon l'invention pour isoler un bâtiment, à laquelle une pièce selon l'invention est représentée verticalement selon son extension longitudinale ;
[Fig. 2] est une vue éclatée de la pièce de la figure 1, représentée isolément ; [Fig. 3] est une vue en coupe partielle d'une extrémité distale de la pièce, à l'endroit où elle est en prise avec une membrane d'étanchéité du système de la figure 1 ;
[Fig. 4] est une demi-coupe partielle similaire à la coupe de la figure 3, représentant une position de la membrane lorsque la pression à l'intérieur est supérieure à la pression à l'extérieur du bâtiment ;
[Fig. 5] est une demi-coupe partielle similaire à la coupe de la figure 4, représentant une position de la membrane lorsque la pression à l'extérieur est supérieure à la pression à l'intérieur du bâtiment ;
[Fig. 6] est une demi-coupe partielle similaire à celle des figures 3 et 4, illustrant un deuxième mode de réalisation pour une pièce selon l'invention ; et,
[Fig. 7] est une demi-coupe partielle similaire à celle des figures 3 et 4, illustrant un troisième mode de réalisation pour une pièce selon l'invention.

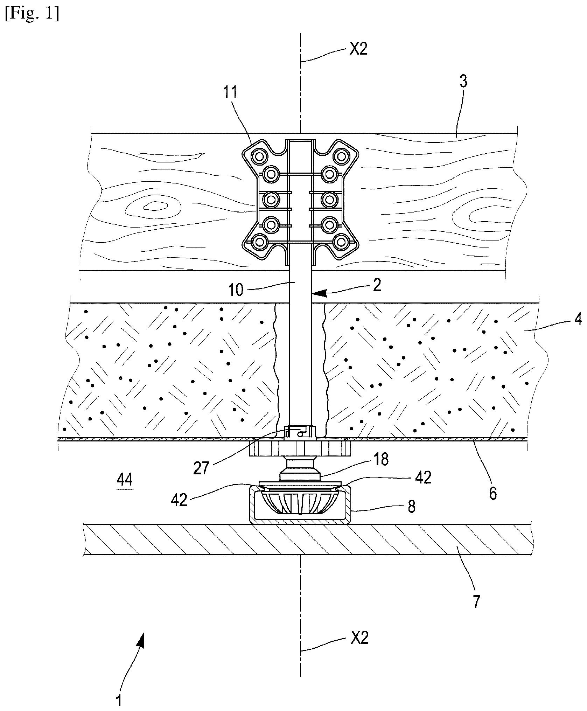

Les termes haut et bas, notamment, font référence à la disposition de la figure 1, sans que cela soit limitatif.

La figure 1 illustre un système 1 selon l'invention pour une isolation thermique sous toiture d'un bâtiment. Le système comprend des pièces selon l'invention, ci-après dénommées suspentes 2, qui permettent de fixer le système à une charpente 3.

Dans l'exemple illustré, outre la suspente 2, le système d'isolation thermique 1 comprend une garniture de matériau isolant 4, ici thermiquement isolant, une membrane 6 et un parement 7.

Dans l'exemple illustré, la garniture 4 comprend une seule couche de matériau isolant fibreux tel que de la laine minérale. La membrane 6 est une membrane pare-vapeur indépendante du matériau isolant, d'épaisseur sensiblement constante E6. Le parement est une plaque de plâtre.

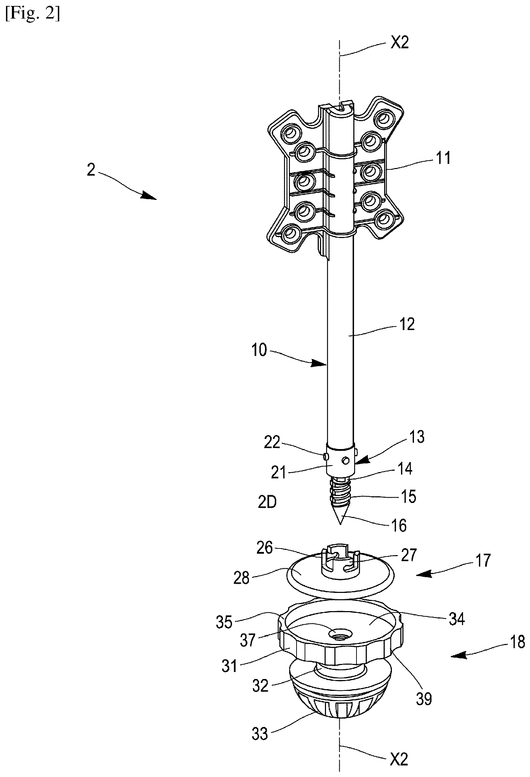

A la figure 1, une seule suspente 2 est représentée, en position d'usage. Elle a un axe longitudinal X2, disposé verticalement. A la figure 2, elle est représentée de façon plus détaillée et isolément, ses composants étant séparés les uns des autres. La suspente illustrée comprend une tige 10, cette tige comprenant, de haut en bas :
- des moyens 11 pour fixer la suspente à la charpente ;
- une allonge 12, solidaire des moyens de fixation 11, sensiblement cylindrique et lisse, s'étendant depuis les moyens de fixation 1 selon l'axe longitudinal X2;
- des moyens d'accrochage 13, disposés dans le prolongement axial de l'allonge ;
- une portion intermédiaire 14, disposée dans le prolongement axial des moyens d'accrochage ;
- une portion filetée 15, disposée dans le prolongement axial de la portion intermédiaire ; et,
- une pointe 16, disposée dans le prolongement axial de la portion filetée.

Dans l'exemple illustré, les moyens de fixation 11, l'allonge 12, les moyens d'accrochage 13, la portion intermédiaire 14, la portion filetée 15 et la pointe 16, sont formés d'une seule pièce. L'allonge 12, les moyens d'accrochage 13, la portion intermédiaire 14, la portion filetée 15 et la pointe 16, sont coaxiaux et sensiblement symétriques de rotation autour de l'axe longitudinal X2.

La suspente comprend en outre une rondelle 17 et un embout 18, l'une et l'autre pouvant être raccordés, de façon amovible, à la tige 10.

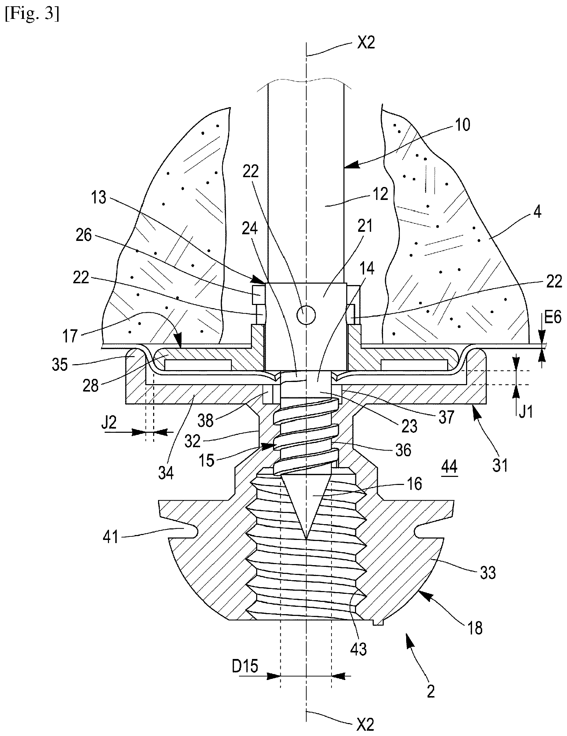

Les figures 1 et 3 illustrent la suspente 2 dans une position d'usage, dans laquelle la rondelle et l'embout sont fixés à la tige 10.

A la figure 1, une seule suspente 2 est représentée, verticalement, fixée à une poutre 3 de la charpente. L'isolant 4 est embroché sur l'allonge 12 et repose sur la rondelle 17 et/ou l'embout 18. La membrane 6 est embrochée sur la tige, entre la rondelle et l'embout. Le parement 7 est suspendu à l'embout 18, à l'aide d'une fourrure 8. Le parement 7 est fixé à la fourrure 8, par exemple par vissage, et la fourrure 8 est fixée par encliquetage à l'embout 18. Cette fourrure est conforme à la norme française NF, notamment au Document Technique Unifié DTU 25.41.

L'allonge 12 a un diamètre constant D12. Les moyens d'accrochage 13 forment une zone cylindrique 21 de diamètre D21 supérieur au diamètre D12 de l'allonge 12. Les moyens d'accrochage comprennent en outre quatre tétons 22 régulièrement répartis autour de l'axe X2 et s'étendant radialement depuis la zone cylindrique 21.

La portion filetée 15 a un noyau de diamètre D15 inférieur au diamètre D12 de l'allonge.

La portion intermédiaire 14 comprend une zone cylindrique de même diamètre D15 que le noyau de la portion filetée 15. Elle comprend en outre une butée 24. La pointe est conique, elle est dirigée vers le bas et s'étend vers le bas à partir du noyau de la zone filetée ; son diamètre le plus grand est égal au diamètre D15 du noyau.

La rondelle 17 comprend un manchon 26. Quatre crochets 27 sont formés dans un bord supérieur du manchon 26. Les crochets 27 sont prévus pour venir en prise avec les tétons 22 des moyens d'accrochage 13, par encliquetage. La rondelle 17 comprend aussi une collerette annulaire 28, s'étendant radialement depuis un bord inférieur du manchon 26.

L'embout 18 comprend une coupelle 31, un col 32 et une prise 33, le col reliant entre elles la prise et la coupelle. La coupelle comprend un fond 34 en forme de plateau radial 34 et une paroi périphérique sensiblement cylindrique 35 s'étendant vers le haut depuis un bord périphérique du plateau 34. Le col s'étend vers le bas, depuis le fond 34. Un taraudage 36 est formé dans le col, dans un alésage qui débouche par un orifice 37 au travers du fond 34. Une contre-butée 38, qui d'étend vers l'axe X2, est formée à l'intérieur de l'orifice. Le taraudage est prévu pour se visser sur la portion filetée 15. La contre-butée 38 est prévue pour venir buter contre la butée 24, de sorte qu'elle limite le vissage. La paroi 35 comprend un moletage 39 extérieur, qui facilite la manipulation de l'embout et son vissage.

Dans la position d'usage, c'est-à-dire lorsque l'embout 18 est entièrement vissé sur la tige 12, c'est-à-dire lorsque la butée 34 est en contact avec la contre-butée 38, la rondelle 17 est, au moins partiellement, longitudinalement logée dans la coupelle 31. Dans cette position, il y a un jeu longitudinal J1 entre la collerette 28 et le fond 34 et un jeu radial J2 entre la collerette et la paroi 35. Les jeux J1, J2 dont tous deux plus larges que l'épaisseur E6 de la membrane.

La prise 33 forme un renflement pourvu d'une gorge périphérique 41. La gorge 41 est ouverte radialement de façon à pouvoir y loger, par encliquetage, des bords entrants opposés 42 de la fourrure 8, comme illustré à la figure 1.

Comme illustré à la figure 2, un procédé d'isolation utilisant des suspentes 2 selon l'invention comprend les étapes suivantes :
- fixation de tiges 10 à la charpente 3 ;
- embrochage de l'isolant 4 sur les tiges 10 ; et,
- fixation de rondelles 17 sur les moyens d'accrochage 13 de chacune des tiges 10.

Dans cette position, l'isolant repose, sans l'aide d'un opérateur, sur les collerettes 28.

Le procédé d'isolation comprend ensuite les étapes suivantes :
- embrochage de la membrane 6 sur la tige 10, sous la rondelle ; et,
- vissage de l'embout 18 sur la tige 10.

Dans cette position, la rondelle 17 et l'embout 18 forment entre eux une chicane pour la membrane 6. Ainsi, la membrane est tenue entre un bord supérieur de la paroi 35 et un bord périphérique de la collerette 28, et, la membrane est plaquée contre une face inférieure de cette collerette. Ainsi, l'étanchéité à l'air est assurée là où la tige traverse la membrane.

La dimension des jeux J1, J2, supérieure à l'épaisseur E6 de la membrane, évite que cette membrane ne soit pincée entre la rondelle 17 et l'embout 18. Ceci évite la création d'une amorce de rupture ou un déchirement de la membrane, susceptible d'affecter la pérennité de cette étanchéité.

De préférence l'orifice 37 a un diamètre supérieur au diamètre D15 du noyau, suffisant pour éviter que la membrane ne vienne s'y coincer, là où elle été déchirée par le passage de la tige 10.

Dans l'exemple illustré aux figures, l'embout 12 comprend un deuxième taraudage 43 coaxial au premier taraudage 36, de diamètre supérieur au premier. Le premier taraudage débouche dans le deuxième et le deuxième taraudage débouche par le bas à la surface inférieure de la prise 33. Le deuxième taraudage est prévu pour y fixer un accessoire, non représenté aux figures.

La présence d'un col 32 sur l'embout 18 permet d'augmenter l'espace 44 entre la membrane 6 et l'habillage 7 ; cet espace peut ainsi servir au passage de câbles, par exemple pour de l'éclairage.

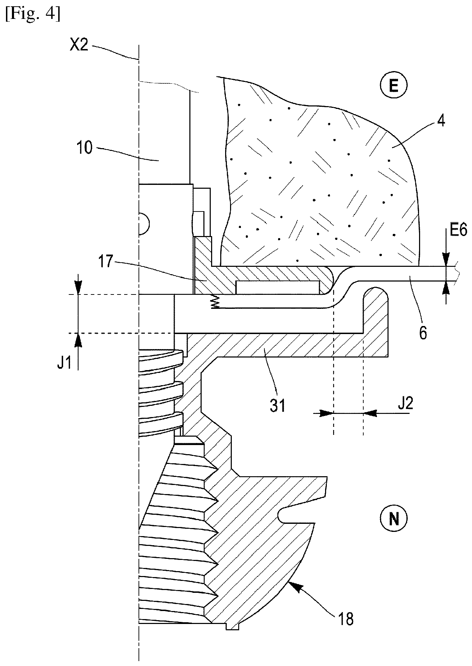

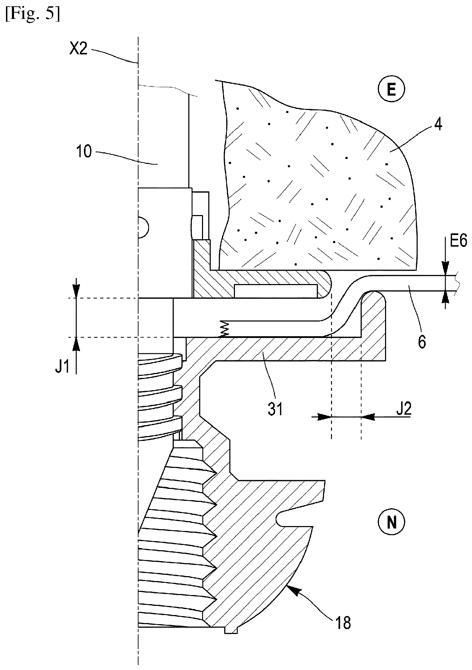

Les figures 4 et 5 sont une vue agrandie similaire à la figure 3, dont seul le côté droit est représenté. A ces figures, la rondelle 17 n'est que partiellement longitudinalement emboîtée dans la coupelle 31, de sorte que l'isolant 4 repose directement sur la rondelle.

La figure 4 représente une position prise par la membrane 6 lorsque la pression à l'intérieur N du bâtiment isolé est supérieure à la pression à l'extérieur E de ce bâtiment. Dans cette position, la membrane 6 est plaquée sous la rondelle 17, et n'a pas de contact direct avec la coupelle 31. L'étanchéité est réalisée par le contact entre la membrane et la rondelle.

La figure 5 représente une position prise par la membrane 6 lorsque la pression à l'intérieur N du bâtiment isolé est inférieure à la pression à l'extérieur E de ce bâtiment. Dans cette position, la membrane 6 est plaquée à l'intérieur et contre la coupelle 31, et n'a pas de contact direct avec la rondelle 17. L'étanchéité est réalisée par le contact entre la membrane et la coupelle.

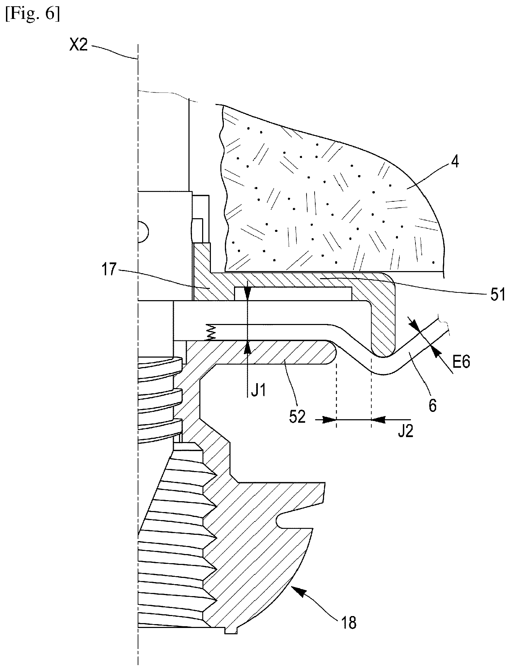

La figure 6 est similaire aux figures 5 et 6, sauf en ce qu'elle illustre un deuxième mode de réalisation. Ce deuxième mode de réalisation sera décrit en ce qu'il diffère du premier, précédemment décrit en référence aux figures 1 à 5.

Dans ce deuxième mode de réalisation, la rondelle 17 comprend une coupelle 51 dont la concavité est orientée vers le bas et l'embout 18 comprend une collerette annulaire 52 prévue pour s'emboiter axialement dans la coupelle 51. Ainsi emboîtés, la collerette 52 et la coupelle 51 forme une chicane pour la membrane 6.

La disposition est donc sensiblement inversée par rapport au premier mode de réalisation. Cette disposition permet de faire reposer l'isolant 4 sur une face supérieure de la coupelle 51 qui présente une surface d'assise plus importante que celle de la collerette 17 dans le premier mode de réalisation.

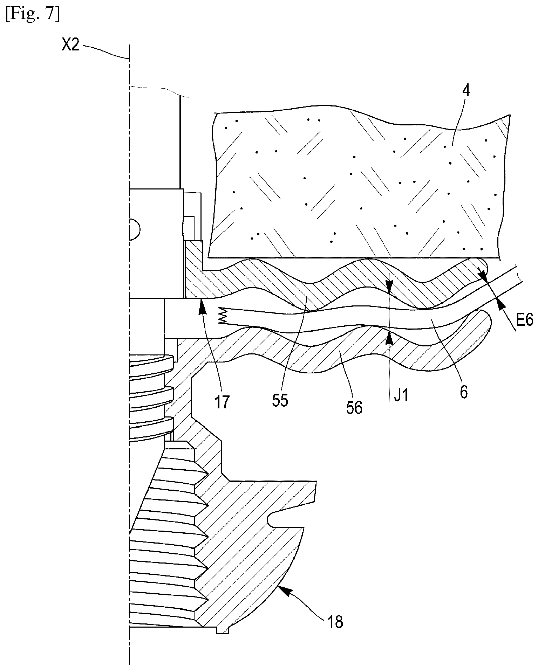

La figure 6 est similaire aux figures 5 à 7, sauf en ce qu'elle illustre un troisième mode de réalisation. Ce troisième mode de réalisation sera décrit en ce qu'il diffère du premier et du deuxième, précédemment décrits en référence aux figures 1 à 5 et 6.

Dans ce troisième mode de réalisation, la rondelle 17 et l'embout 18 comprennent chacun une collerette annulaire respective 55, 56. Chacune des collerettes 55, 56 comprend une forme d'ondes concentriques autour de l'axe X2. Ces formes sont disposées de sorte qu'une partie concave de la collerette 55 de la rondelle 17 soit en vis-à-vis d'une partie convexe de la collerette 56 de l'embout 18, en maintenant un jeu axial J1 sensiblement constant entre les collerettes. Dans l'exemple illustré, le jeu axial J1 est supérieur à l'épaisseur E6 de la membrane 6.

Bien sûr, l'invention n'est pas limitée aux exemples qui viennent d'être décrits. Au contraire, l'invention est définie par les revendications qui suivent.

Il apparaîtra en effet à l'homme de l'art que diverses modifications peuvent être apportées aux modes de réalisation décrits ci-dessus, à la lumière de l'enseignement qui vient de lui être divulgué.

Ainsi, l'embout peut ne pas comprendre de col.

Aussi, l'embout peut ne pas être monté sur la tige par vissage. Il peut y être monté par translation axiale et encliquetage.

En outre, une suspente selon l'invention n'est pas limitée à faire étanchéité sur une membrane pare-vapeur. Ainsi, un autre type de feuille peut être introduite entre rondelle et embout. Cela peut être le cas d'un raccord d'étanchéité, du type rustine et généralement dénommé « patch », coopérant avec un revêtement de surface de la garniture d'étanchéité là où elle est traversée par la tige de la suspente.

Dans les exemples précédemment décrits, la membrane est fournie indépendamment de la garniture de matériau isolant ; c'est par exemple le cas du système d'isolation référencé « RT Max » disponible au catalogue de la Société Knauf Insulation, 55 rue Aristide Briand à 92300 Levallois-Perret, France. Bien entendu, une suspente selon l'invention peut aussi être utilisée avec une isolation dans laquelle un revêtement pare-vapeur est fournie d'une seule pièce avec la garniture de matériau isolant ; c'est par exemple le cas de l'isolant référencé « RT Plus » disponible au catalogue de la Société Knauf Insulation, 55 rue Aristide Briand à 92300 Levallois-Perret, France.

Une suspente selon l'invention peut aussi être utilisée sans membrane.

## Revendications

1. Pièce (2) pour fixer une isolation (4,6) et un parement (7) à une structure (3) d'un bâtiment, notamment à une toiture, notamment à une charpente (3) de cette toiture, ladite isolation pouvant comprendre une garniture (4) de matériau isolant et une feuille (6), ladite feuille pouvant être une membrane, notamment une membrane pare-vapeur (6), ladite pièce comprenant :
- une tige (10) qui comprend des moyens pour fixer la pièce, au moins indirectement, à ladite structure ;
- des moyens (17, 18) pour porter la garniture ;
- des moyens (18) pour y fixer, au moins indirectement, ledit parement ; et,
- des moyens (28, 31 ; 51, 52) pour former une chicane autour de ladite tige afin d'y insérer, le cas échéant, ladite feuille (6).

2. Pièce (2) selon la revendication 1, **caractérisé en ce que** dans une position d'usage la chicane forme un jeu longitudinal et/ou radial supérieur à l'épaisseur de la feuille, le cas échéant.

3. Pièce (2) selon l'une des revendications 1 et 2, **caractérisé en ce qu'**elle comprend en outre une rondelle (17) et un embout (18), la tige comprenant successivement, selon un axe longitudinal (X2) :
- des moyens (11) pour fixer la pièce, au moins indirectement, à la structure ;
- des moyens pour accrocher (13) ladite rondelle (17) sur la tige dans une position d'usage ; et,
- des moyens (15), pour solidariser ledit embout (18) avec la tige, dans la position d'usage ;
de sorte que, dans ladite position d'usage, la rondelle et l'embout forment ensemble la chicane.

4. Pièce (2) selon la revendication 3, **caractérisé en ce que** la rondelle et/ou l'embout forment le support (17, 18) pour la garniture.

5. Pièce (2) selon l'une des revendications 3 et 4, **caractérisé en ce que** la rondelle et l'embout comprennent, l'un une collerette (28, 52) et l'autre une coupelle (31, 51), la collerette et la coupelle étant disposées de sorte que, dans la position d'usage, elles forment ensemble la chicane, ladite collerette s'étendant de préférence radialement.

6. Pièce (2) selon la revendication 5, **caractérisé en ce que**, dans la position d'usage, la collerette est, au moins partiellement, longitudinalement logée dans la coupelle.

7. Pièce (2) selon l'une des revendications 5 ou 6, **caractérisée en ce que** la rondelle et l'embout sont conçus de sorte que, dans la position d'usage, il existe un jeu longitudinal (J1) entre un fond (34) de la cuvette (31) et la collerette (28) et un jeu radial (J2) entre une paroi périphérique (35) de ladite cuvette et ladite collerette, lesdits jeux (JI, J2) mesurant de préférence au moins un millimètre, encore plus de préférence au moins deux millimètres.

8. Pièce (2) selon l'une des revendications 3 à 7, **caractérisée en ce que** les moyens pour solidariser l'embout (18) comprennent une portion filetée (13) prévue pour venir en prise avec un taraudage dudit embout et **en ce qu'**il existe, entre les moyens d'accrochage et ladite portion filetée, une butée (24) pour limiter le vissage de l'embout sur la tige.

9. Pièce (2) selon l'une des revendications 3 à 8, **caractérisée en ce que** les moyens d'accrochage (13) comprennent au moins un téton (22) s'étendant radialement et **en ce que** la rondelle (17) comprend un manchon dans lequel est formé au moins un crochet (26) pour venir en prise avec ledit téton.

10. Pièce (2) selon l'une des revendications 1 à 9, **caractérisé en ce que** la tige comprend une pointe (16) disposée à une extrémité de la tige opposée aux moyens (11) de fixation de la tige à la structure (3).

11. Pièce (2) selon l'une des revendications 1 à 10, **caractérisée en ce que** la tige comprend, entre les moyens (11) de fixation de la tige et les moyens d'accrochage (13), une allonge (12), de préférence sensiblement lisse et/ou cylindrique.

12. Système d'isolation, notamment d'isolation thermique, **caractérisé en ce qu'**il comprend une ou plusieurs pièces (2) selon l'une des revendications 1 à 11, une garniture (7) de matériau isolant (4) et une feuille (6), ladite feuille étant de préférence une membrane, notamment une membrane pare-vapeur (6).

13. Procédé d'isolation utilisant un système selon la revendication 12, **caractérisé en ce qu'**il comprend les étapes suivantes :
- fixation de la tige (10) de chaque pièce (2) à la structure (3) ;
- embrochage de l'isolant (4) sur les tiges (10) ;
- fixation d'une rondelle (17) sur au moins une des tiges (10) ;
- embrochage de la feuille (6) sur au moins une des tiges (10) sous la rondelle ; et,
- fixation d'un embout (18) sur au moins une des tiges (10),
de préférence, de sorte que la membrane, le cas échéant, est maintenue de façon mobile entre ladite au moins une rondelle et ledit au moins un embout.
